# DEMANDE DE BREVET EUROPEEN

(11) **EP 1 134 614 A1**
(43) Date de publication de la demande: **19.09.2001**
(21) Numéro de dépôt: 01390002.2
(22) Date de dépôt: 15.03.2001
(51) Int. Cl.: G03D 15/00, G03B 23/02

(54) **Boîtier d'emballage pour tirages photographiques**

(30) Priorité: 17.03.2000 FR 0003440
(71) Demandeur: PACK SYNERGIE, 78420 Carrieres-sur-Seine (FR)
(72) Inventeur: Foucou, Alain, 31650 Lauzerville (FR)
(74) Mandataire: Morelle, Guy Georges Alain

(57) **Abrégé**

L'invention concerne un boîtier d'emballage pour tirages photographiques, comprenant un corps dans lequel est ménagé un logement généralement parallélépipédique possédant deux grandes faces opposées de dimensions correspondant à celles des tirages à emballer, l'une desdites grandes faces formant le fond du logement et l'autre desdites grandes faces étant ouverte vers l'extérieur dudit corps, ledit logement ayant une profondeur le rendant apte à recevoir un certain nombre de tirages.
Ce boîtier comporte des moyens de support (24) pour le maintenir, lorsqu'il est posé sur une surface sensiblement plane et horizontale, dans une position où lesdites grandes faces sont sensiblement verticales de manière à pouvoir l'utiliser comme encadrement d'exposition pour un tirage photographique disposé dans le logement.

## Description

La présente invention concerne un boîtier d'emballage pour tirages photographiques, et plus particulièrement un tel boîtier comprenant un corps dans lequel est ménagé un logement généralement parallélépipédique possédant deux grandes faces opposées de dimensions correspondant à celles des tirages à emballer, l'une desdites grandes faces formant le fond du logement et l'autre desdites grandes faces étant ouverte vers l'extérieur dudit corps, ledit logement ayant une profondeur le rendant apte à recevoir un certain nombre de tirages.

On connaît de tels boîtiers d'emballage, utilisés notamment pour restituer aux photographes leurs tirages après développement. Le corps est lui-même parallélépipédique et relativement plat, et forme un rebord en lisière du logement. Un couvercle permet de le fermer. Au repos, un tel boîtier est normalement posé à plat. La présente invention vise à permettre la transformation d'un tel boîtier d'emballage en encadrement pour tirage photographique.

A cet effet, l'invention a pour objet un boîtier d'emballage pour tirages photographiques, comprenant un corps dans lequel est ménagé un logement généralement parallélépipédique possédant deux grandes faces opposées de dimensions correspondant à celles des tirages à emballer, l'une desdites grandes faces formant le fond du logement et l'autre desdites grandes faces étant ouverte vers l'extérieur dudit corps, ledit logement ayant une profondeur le rendant apte à recevoir un certain nombre de tirages, caractérisé par le fait qu'il comporte des moyens de support pour le maintenir, lorsqu'il est posé sur une surface sensiblement plane et horizontale, dans une position où lesdites grandes faces sont sensiblement verticales.

Les moyens de support forment donc un pied susceptible de maintenir le boîtier dressé. Si un tirage est laissé en place dans le logement, le rebord de ce logement forme alors un cadre d'exposition pour ce tirage.

Dans un mode de réalisation particulier, le boîtier selon l'invention possède une face arrière généralement plane et parallèle aux dites grandes faces du logement, lesdits moyens de support étant montés sur ladite face arrière.

Plus particulièrement, lesdits moyens de support peuvent être amovibles et posséder des moyens de fixation agencés pour coopérer avec des moyens complémentaires sur ladite face arrière dans une position d'utilisation, lesdits moyens de support étant aptes à adopter une configuration généralement plane pour être disposés dans ledit logement dans une position de stockage.

Ainsi, lorsque le boîtier selon l'invention est utilisé dans sa fonction normale d'emballage, le pied peut être stocké dans le logement avec les tirages photographiques. Encore plus particulièrement, lesdits moyens de support peuvent comprendre un flan en matériau semi-rigide muni d'une ligne de pliage le divisant en deux parties sensiblement identiques, chacune desdites parties comprenant une patte repliable agencée pour s'engager dans une fente ménagée dans la face arrière du boîtier.

Également dans un mode de réalisation particulier de l'invention, le boîtier comprend une plaque en matériau transparent agencée pour être disposée dans ledit logement au-dessus d'au moins un tirage photographique.

Dans la fonction d'encadrement du boîtier, la plaque forme une vitre de protection. Dans sa fonction d'emballage, elle peut former un couvercle.

Plus particulièrement, ladite plaque peut comprendre des moyens de clipsage pour la maintenir dans ledit logement.

Également dans un mode de réalisation particulier de l'invention, le boîtier est de forme sensiblement parallélépipédique, et est réalisé à partir d'un premier flan généralement rectangulaire formant ladite face arrière et d'un deuxième flan en matériau semi-rigide dont une partie centrale, dans laquelle est ménagé ledit logement, a sensiblement les mêmes dimensions que ledit premier flan et est disposée au-dessus de ce premier flan, ladite partie centrale possédant le long de ses bords des rabats latéraux repliés derrière ledit premier flan.

Plus particulièrement, lesdits rabats latéraux peuvent être munis de découpes agencées pour s'engager dans des fentes ménagées dans ledit premier flan pour solidariser lesdits premier et deuxième flans.

Lesdits rabats peuvent comporter une première partie repliée sensiblement perpendiculairement aux plans du premier flan et de la partie centrale du deuxième flan, et une deuxième partie repliée derrière le premier flan.

Dans ce cas, ledit premier flan peut être réalisé en matériau semi-rigide et les bords dudit premier flan peuvent posséder des prolongements repliés dans la direction du deuxième flan, sensiblement perpendiculairement aux plans du premier flan et de la partie centrale du deuxième flan

Ladite partie centrale du deuxième flan peut être découpée de manière à former des languettes repliées en direction du premier flan pour former les parois latérales dudit logement.

Plus particulièrement, les extrémités desdites languettes peuvent être repliées sensiblement dans le plan du premier flan pour former le fond dudit logement. Dans un mode de réalisation particulier, lesdits moyens de clipsage sont constitués par des saillies formées aux angles de ladite plaque et agencées pour s'engager entre les bords latéraux de deux languettes adjacentes.

On décrira maintenant, à titre d'exemple non limitatif, un mode de réalisation particulier de l'invention, en référence aux dessins schématiques annexés dans lesquels :
- la figure 1 est une vue en plan d'un premier flan pour la réalisation d'un boîtier selon l'invention ;
- la figure 2 est une vue en plan d'un deuxième flan pour la réalisation d'un boîtier selon l'invention ;
- la figure 3 est une vue en plan d'un troisième flan pour la réalisation d'un boîtier selon l'invention ;
- la figure 4 est une vue de face de ce boîtier après montage ;
- la figure 5 est une vue en coupe agrandie selon la ligne V-V de la figure 4 ;

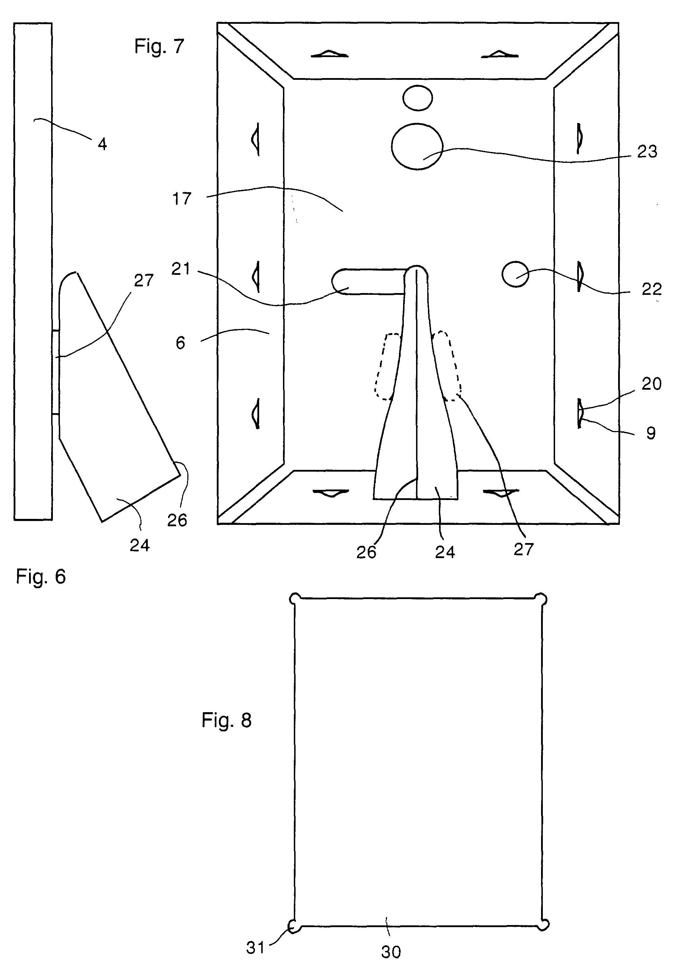

- la figure 6 est une vue de côté du boîtier en configuration d'encadrement ;
- la figure 7 en est une vue de l'arrière ;et
- la figure 8 est une vue de face d'une vitre de protection.

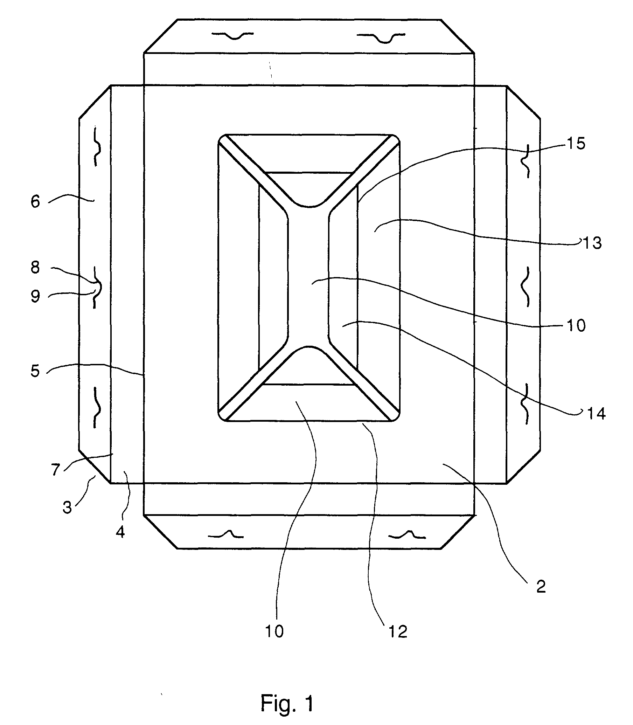

Le flan 1 représenté à la figure 1 comporte une partie centrale 2 de forme rectangulaire bordée, le long de ses quatre côtés, de rabats latéraux 3. Chaque rabat 3 comporte une première partie rectangulaire 4 séparée de la partie centrale par une ligne de pliage 5, et une deuxième partie trapézoïdale 6 séparée de la première partie par une ligne de pliage 7. Des découpes 8 formant des languettes 9 sont réparties le long des parties 6.

La partie centrale 2 comporte en son centre une découpe 10 sensiblement en forme de X. Cette découpe délimite quatre languettes 11 séparées chacune de la périphérie de la partie 2 par une ligne de pliage 12. Chaque languette 10 comporte une première partie 13 trapézoïdale adjacente à la périphérie de la partie 2 et une partie d'extrémité 14 séparée de la partie 13 par une ligne de pliage 15.

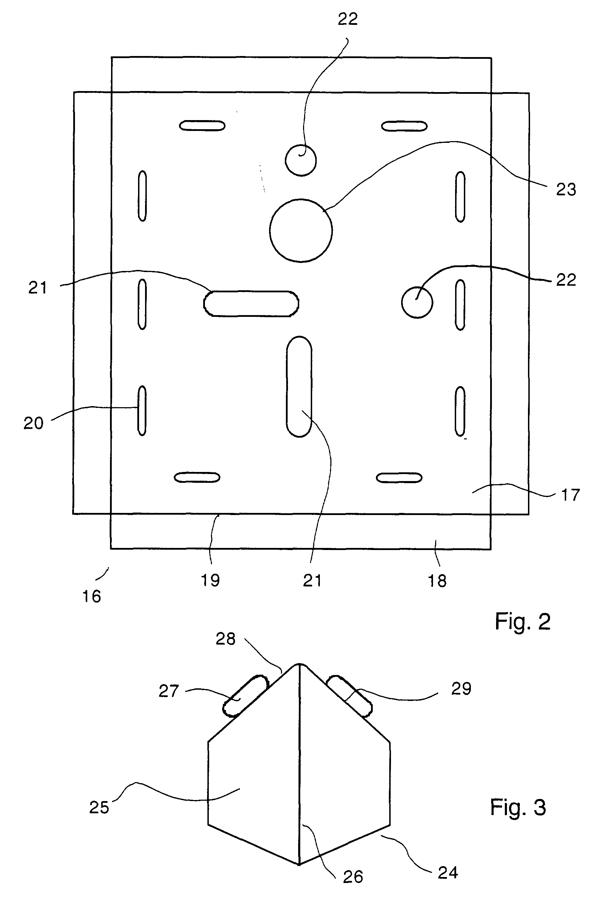

Le flan 16 de la figure 2 comporte une partie centrale 17 sensiblement de mêmes formes et dimensions que la partie centrale 2 du flan 1, bordée, le long de ses quatre côtés, de rabats latéraux 18 séparés de la partie centrale 17 par une ligne de pliage 19. La partie centrale 17 comporte le long de ses bords un ensemble de fentes 20 en nombre égal à celui des découpes 8. Elle comporte par ailleurs deux fentes 21 de plus grandes dimensions dont chacune est parallèle à, est centrée par rapport à deux des bords parallèles de la partie centrale 17.

La partie centrale 17 comporte en outre à proximité de deux de ses bords, et centrés, des orifices circulaires 22 de petites dimensions, et à proximité de son centre un orifice circulaire 23 de plus grandes dimensions.

Le flan 24 de la figure 3 est formé de deux parties trapézoïdales 25 réunies le long de leurs grands côtés par une ligne de pliage 26. Chaque partie 25 possède une patte 27 en prolongement d'un de ses côtés 28 adjacent à la ligne 26, dont elle est séparée par une ligne de pliage 29.

Les flans 1, 16 et 24 sont réalisés en matière plastique semi-rigide.

Les largeurs des parties 4, 13 et 18 sont sensiblement égales et correspondent à l'épaisseur du boîtier et à la profondeur du logement.

Le boîtier comprend en outre une plaque rectangulaire 30 en matériau transparent, ayant les dimensions du rectangle délimité par les lignes de pliage 12. Cette plaque comporte à ses angles des saillies 31 de forme généralement circulaire.

Pour effectuer le montage du boîtier, on peut procéder tout d'abord au repliement des rabats latéraux 18 du flan 16 autour des lignes 19, perpendiculairement à la partie centrale 17.

En ce qui concerne le flan 1, on procède au repliement des parties 4 des rabats latéraux 3 autour des lignes 5, perpendiculairement à la partie centrale 2, puis au repliement des parties 6 autour des lignes 7 sous, et parallèlement à la partie centrale 2.

Les parties 13 des languettes 10 sont repliées autour des lignes 12 perpendiculairement à la partie centrale 2, dans la même direction que les parties 4, et les extrémités 14 de ces languettes sont repliées autour des lignes 15 parallèlement à la partie centrale 2 et vers le centre de cette partie. On forme ainsi un logement 32 dont les paroi latérales sont formées par les parties 13 des languettes 10, dont le fond est formé par les extrémités 14 de ces languettes, et dont la face supérieure est ouverte, mais peut être fermée par la plaque 30.

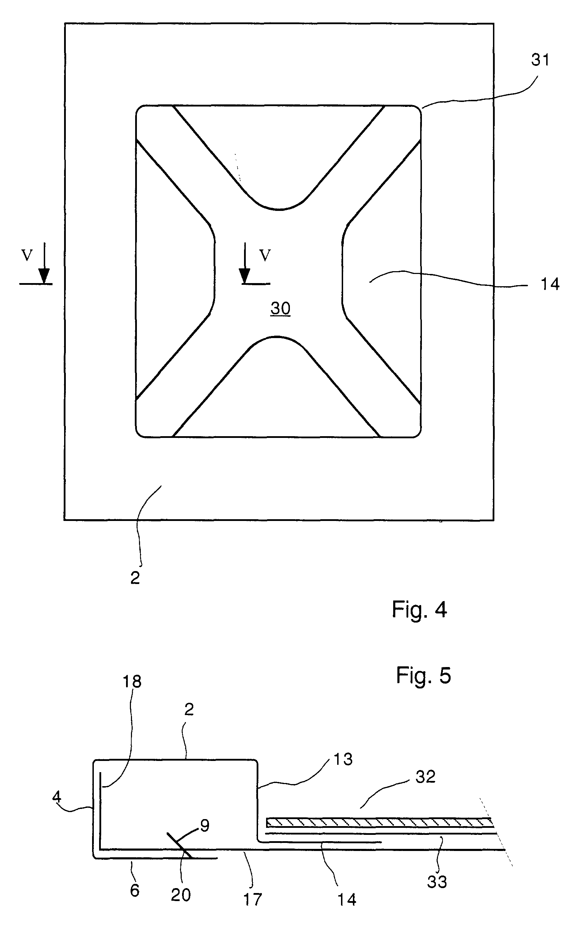

L'assemblage des flans 1 et 16 s'effectue en ouvrant partiellement le flan 1 replié, en y insérant le flan 16 replié avec ses rebords 18 dirigés vers le haut (par rapport à la figure 4), en refermant le flan 1, et en engageant les découpes 9 dans les fentes 20.

En configuration d'emballage, le flan 24 et une pile de tirages photographiques sont disposés dans le logement 32 et recouverts par la plaque 30 qui forme un couvercle. Cette dernière est clipsée par engagement de ses saillies 32 sous la partie 2 du flan 1, entre les bords des parties 13 adjacentes.

Pour disposer le boîtier en configuration d'encadrement, le logement 32 est tout d'abord vidé de son contenu en enfonçant un doigt dans l'orifice 23 pour déclipser la plaque 30. Puis, un tirage photographique 33 est redisposé dans le logement 22 et la plaque est reclipsée. Le flan 24 est plié autour de la ligne 26 et les pattes 27 sont engagées dans une des fentes 21, selon que le tirage 33 doit être exposé verticalement ou horizontalement, pour former le pied de l'encadrement.

On observera que, dans cette configuration, la plaque 30, outre qu'elle forme une protection pour le tirage, aide à maintenir verticales les parois latérales du logement. L'encadrement peut également être suspendu à l'aide de l'un des orifices 22.

## Revendications

1. Boîtier d'emballage pour tirages photographiques, comprenant un corps dans lequel est ménagé un logement (32) généralement parallélépipédique possédant deux grandes faces opposées de dimensions correspondant à celles des tirages à emballer, l'une desdites grandes faces formant le fond du logement et l'autre desdites grandes faces étant ouverte vers l'extérieur dudit corps, ledit logement ayant une profondeur le rendant apte à recevoir un certain nombre de tirages, ***caractérisé par le fait qu***'il comporte des moyens de support (24) pour le maintenir, lorsqu'il est posé sur une surface sensiblement plane et horizontale, dans une position où lesdites grandes faces sont sensiblement verticales.

2. Boîtier d'emballage selon la revendication 1, possédant une face arrière (17) généralement plane et parallèle aux dites grandes faces du logement, lesdits moyens de support (24) étant montés sur ladite face arrière.

3. Boîtier d'emballage selon la revendication 2, dans lequel lesdits moyens de support (24) sont amovibles et possèdent des moyens de fixation (27) agencés pour coopérer avec des moyens complémentaires (21) sur ladite face arrière dans une position d'utilisation, lesdits moyens de support étant aptes à adopter une configuration généralement plane pour être disposés dans ledit logement dans une position de stockage.

4. Boîtier d'emballage selon la revendication 3, dans lequel lesdits moyens de support comprennent un flan (24) en matériau semi-rigide muni d'une ligne de pliage (26) la divisant en deux parties sensiblement identiques (25), chacune desdites parties comprenant une patte repliable (27) agencée pour s'engager dans une fente (21) ménagée dans la face arrière (17) du boîtier.

5. Boîtier d'emballage selon l'une quelconque des revendications 1 à 4, comprenant une plaque (30) en matériau transparent agencée pour être disposée dans ledit logement (32) au-dessus d'au moins un tirage photographique (33).

6. Boîtier d'emballage selon la revendication 5, dans lequel ladite plaque (30) comprend des moyens de clipsage (31) pour la maintenir dans ledit logement (32).

7. Boîtier d'emballage selon l'une quelconque des revendications 1 à 6, de forme sensiblement parallélépipédique, et réalisé à partir d'un premier flan (16) généralement rectangulaire formant ladite face arrière et d'un deuxième flan (1) en matériau semi-rigide dont une partie centrale (2), dans laquelle est ménagé ledit logement, a sensiblement les mêmes dimensions que ledit premier flan et est disposée au-dessus de ce premier flan, ladite partie centrale possédant le long de ses bords des rabats latéraux (3) repliés derrière ledit premier flan.

8. Boîtier d'emballage selon la revendication 7, dans lequel lesdits rabats latéraux (3) sont munis de découpes (8) agencées pour s'engager dans des fentes (20) ménagées dans ledit premier flan (16) pour solidariser lesdits premier et deuxième flans.

9. Boîtier d'emballage selon l'une quelconque des revendications 7 et 8, dans lequel lesdits rabats (3) comportent une première partie (4) repliée sensiblement perpendiculairement aux plans du premier flan (16) et de la partie centrale (2) du deuxième flan, et une deuxième partie (6) repliée derrière le premier flan.

10. Boîtier d'emballage selon la revendication 9, dans lequel ledit premier flan (16) est réalisé en matériau semi-rigide et les bords dudit premier flan possèdent des prolongements (18) repliés dans la direction du deuxième flan (1), sensiblement perpendiculairement aux plans du premier flan et de la partie centrale (2) du deuxième flan.

11. Boîtier d'emballage selon l'une quelconque des revendications 7 à 10, dans lequel ladite partie centrale (2) du deuxième flan (1) est découpée de manière à former des languettes (10) repliées en direction du premier flan (16) pour former les parois latérales dudit logement (32).

12. Boîtier d'emballage selon la revendication 11, dans lequel les extrémités (14) desdites languettes (10) sont repliées sensiblement dans le plan du premier flan (16) pour former le fond dudit logement (32).

13. Boîtier d'emballage selon la revendication 6 et l'une quelconque des revendications 11 et 12, dans lequel lesdits moyens de clipsage sont constitués par des saillies (31) formées aux angles de ladite plaque (30) et agencées pour s'engager entre les bords latéraux de deux languettes (10) adjacentes.
